# EUROPÄISCHE PATENTSCHRIFT

(11) **EP 1 199 100 B1**
(45) Veröffentlichungstag und Bekanntmachung des Hinweises auf die Patenterteilung: **05.07.2006**
(21) Anmeldenummer: 01123237.8
(22) Anmeldetag: 02.10.2001
(51) Int. Cl.: B01J 13/16, B41M 5/165

(54) **Mikrokapseln mit Wänden aus Polyharnstoff**
Microcapsules with walls of polyurea
Microcapsules ayant des parois de polyurée

(30) Priorität: 16.10.2000 DE 10051194
(43) Veröffentlichungstag der Anmeldung: 24.04.2002
(73) Patentinhaber: LANXESS Deutschland GmbH, 51369 Leverkusen (DE)
(72) Erfinder: Kleban, Martin, Dr., 51381 Leverkusen (DE); Klug, Günter, Dr., 40764 Langenfeld (DE); Weisser, Jürgen, Dr., 41569 Rommerskirchen (DE)

(56) Entgegenhaltungen:
- EP-A- 0 727 251
- EP-A- 0 841 088

## Beschreibung

Die vorliegende Erfindung betrifft Mikrokapseln mit Wänden aus Polyharnstoff oder enthaltend Polyharnstoff, der durch Umsetzung von Polyisocyanaten, Guanidinverbindungen und gegebenenfalls Aminen erhalten wird, Verfahren zur Herstellung dieser Mikrokapseln sowie die aus den Mikrokapseln hergestellten kohlefreien Durchschreibepapiere.

Kohlefreie Durchschreibepapiere enthalten auf ihrer Rückseite eine Schicht Mikrokapseln fixiert. In letzteren befindet sich in Öl gelöst ein sogenannter Farbgeber, der in der Lage ist, in Gegenwart saurer Entwicklungssubstanzen innerhalb weniger Sekunden einen Farbumschlag von farblos nach farbig zu bewirken.

Platziert man nun ein mit Kapseln beschichtetes Papier auf ein mit Entwicklersubstanzen präpariertes Papier in der Weise, dass die Kapseln in direktem Kontakt mit dem Entwickler stehen, so wird auf der Entwicklerseite ein farbiges Schriftbild erzeugt, sobald man das Papier mit Kapseln auf der Rückseite beschreibt und die Kapseln durch den Druck des Schreibgerätes zerplatzen und den Farbgeber freigeben.

Bei einer Variante dieses Verfahrens werden mit Kapseln beschichtete Papiere direkt mit einer Entwicklerschicht nachbeschichtet (sogenanntes 2-Schicht self-contained paper) bzw. Kapseln werden direkt mit Entwickler vermischt und auf Papier beschichtet (sogenanntes Einschicht self-contained Papier). Bei diesen - nachfolgend "SC-Papiere" - genannten Papieren kann durch mechanischen Druck direkt auf der beschichteten Seite ein Schriftbild - z.B. durch Auflegen eines Bogens unbeschichteten Papiers und dessen Beschriftung - erzeugt werden.

Kohlefreie Durchschreibepapiere sind weltweit verbreitet, sie unterscheiden sich im wesentlichen nur durch die Art der verwendeten Mikrokapselwand. Üblich sind hier Gelatine-, Melamin-Formaldehyd- und Polyurethan- bzw. Polyharnstoffkapseln. Die Polyharnstoflkapseln werden üblicherweise durch ein Grenzflächenpolyadditionsverfahren gewonnen, dessen Grundzüge nachfolgend skizziert werden.

Im allgemeinen löst man in einem Öl unter Erwärmen einen geeigneten Farbgeber und versetzt diese Mischung mit einem Polyisocyanat. Außerdem bereitet man eine wässrige Lösung eines Schutzkolloids z.B. Polyvinylalkohol, und stellt aus Öl- und Wasserphase mit Hilfe eines Emulgiergerätes eine feinteilige Öl-in-Wasser-Emulsion her, deren Korngröße etwa dem mittleren Durchmesser der gewünschten Kapsel entspricht.

In einem parallelen oder nachfolgenden Verfahrenschritt gibt man zu dieser Emulsion ein in Wasser gelöstes Amin bzw. eine aminähnliche Substanz (nachfolgend als "Vernetzer" bezeichnet). Dieses bewirkt an der Phasengrenze Öl/Wasser eine schnelle Abreaktion von im Öl gelöstem Isocyanat unter Bildung eines dünnen Polyharnstofffilms. Durch Wärmezufuhr und entsprechende Reaktionszeit lässt sich diese Polyaddition nahezu quantitativ durchführen. Diese Vorgehensweise wird als Phasengrenzflächenverfahren bezeichnet. Man erhält schließlich in Wasser dispergierte, Isocyanat-freie Öltropfen, die mit einer elastischen Polyharnstoffwand umgeben sind und als Mikrokapseln bezeichnet werden. Typische, derartige Verfahren und daraus resultierende Kapseln sind beispielsweise in den Patentschriften US-A 5.225.118, US-A 5.164.126, EP-A-780.154, US-A 5.635.211, US-A 5.643.506, EP-A 0 535 384 beschrieben.

Gemäß dem Stand der Technik wird zur Herstellung von Mikrokapseln mit Polyharnstoffwänden nach einem Phasengrenzflächenverfahren eine hydrophobe Ölphase benötigt, die ein Polyisocyanat als primären Wandbildner enthält. Die Dicke der späteren Kapselwand ist direkt proportional zum Anteil des primären Wandbildners, des Polyisocyanates.

Einerseits tritt mit zunehmender Wanddicke eine Verbesserung wichtiger physikalischer und anwendungstechnischer Eigenschaften (z.B. Bruchverhalten, Reibungsunempfindlichkeit, thermische Beständigkeit etc.) ein.

Andererseits geht mit zunehmendem Anteil des Polyisocyanates als primärem Wandbildner eine Verteuerung der Ölphase und somit der späteren Mikrokapsel einher, da es sich bei den geeigneten Polyisocyanaten um hochwertige, somit preislich anspruchsvolle Verbindungen, handelt.

Die Verwendung von Guanidinverbindungen als Vernetzer erlaubt zwar die Herstellung von Kapseln mit guten Eigenschaften, bei Isocyanurat-haltigen Polyisocyanaten jedoch beträgt der Anteil in der Ölphase und damit der Wandanteil der Mikrokapseln immerhin 10 Gew.-% (vgl. Bsp. 10 aus EP-A-727 251).

Es stellte sich daher die technische Aufgabe, nach einer Kombination von primärem Wandbildner (Polyisocyanat) und einem geeigneten Vernetzer zu suchen, die auch mit Anteilen von weniger als 10 % Polyisocyanat in der Ölphase zu Mikrokapseln mit Eigenschaften führt, die in wichtigen Gebrauchseigenschaften dem Stand der Technik entsprechen.

Diese Aufgabe wurde durch die vorliegende Erfindung gelöst.

Gefunden wurden Mikrokapseln, deren Wände aus Umsetzungsprodukten von Polyisocyanaten, Guanidinverbindungen und gegebenenfalls Aminen bestehen oder solche Umsetzungsprodukte enthalten, wobei die Polyisocyanate, einen Isocyanurat-Anteil von wenigstens 80 Gew.-%, bezogen auf Polyisocyanat, besitzen, dadurch gekennzeichnet, dass die Wand im Mittel 9 Gew.-% oder weniger, bezogen auf das Gesamtgewicht der Mikrokapsel, ausmacht.

In einer bevorzugten Ausführungsform beträgt der mittlere Wandanteil der Mikrokapsel weniger als 7 Gew.-%, insbesondere weniger als 6 Gew.-%, besonders bevorzugt 5 Gew.-% oder weniger, bezogen auf das Gesamtgewicht der Mikrokapsel.

Als Isocyanuratstruktur-aufweisende Polyisocyanate kommen insbesondere trimerisierte Diisocyanate der Formel (I) in Frage 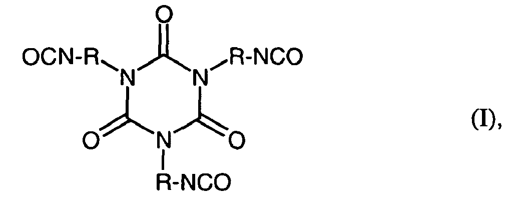 worin
- R: für einen zweiwertigen aliphatischen oder cycloaliphatischen Rest steht, insbesondere für einen C₁-C₁₀-aliphatischen Rest oder für einen C₆-C₁₀-cycloaliphatischen Rest, vorzugsweise für (CH₂)₆ steht,

als auch deren Umsetzungsprodukte mit weiteren 2n Äquivalenten Diisocyanaten der Formel OCN-R-NCO unter Isocyanuratbildung, im folgenden als oligomeres Polyisocyanat mit Isocyanuratstruktur bezeichnet. Bevorzugt bedeutet n eine Zahl von 0-10, insbesondere von 0 bis 4. Bevorzugt steht R für (CH₂)₆.

Bevorzugt besitzen mehr als 90 Gew.-% aller Polyisocyanate, ganz besonders bevorzugt sogar mehr als 95 Gew.-% aller Polyisocyanate Isocyanuratstrukturen.

In einer weiteren bevorzugten Ausführungsform beträgt der Anteil an Isocyanurat der Formel I, insbesondere worin R = (CH₂)₆, mehr als 30 Gew.-%, insbesondere mehr als 45 Gew.-%, bezogen auf Polyisocyanat. Der Anteil der oligomeren Polyisocyanate, insbesondere solche auf Basis von Formel I, worin R = (CH₂)₆, und n ≧1 mit Isocyanuratstruktur, bezogen auf Polyisocyanat, beträgt vorzugsweise mehr als 20 Gew.-%, insbesondere mehr als 30 Gew.-%.

Die Trimerisat- und Oligomerisat-Anteile des Polyisocyanats lassen sich im allgemeinen mit der Gel-Permeations-Chromatographie bestimmen.

Für die erfindungsgemäße Verwendung sind solche Polyisocyanate geeignet, deren Viskosität kleiner gleich 4.500 mPas, vorzugsweise kleiner gleich 3.500 mPas ist. Weiterhin besitzen sie bevorzugt einen NCO-Gehalt von wenigstens 10 Gew.-%, vorzugsweise wenigstens 15 Gew.-%, insbesondere wenigstens 20,0 Gew.-%.

Für die Herstellung erfindungsgemäßer Mikrokapseln kommen als Guanidinverbindungen beispielsweise solche der Formel (II) in Frage 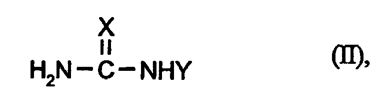 in der
- X: für HN=, 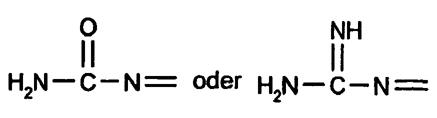 und
- Y: für H-; NC-; H₂N-; HO-; 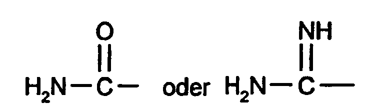 stehen
sowie deren Salze mit Säuren.

Beispielsweise kann es sich bei den Salzen um Salze von Kohlensäure, Salpetersäure, Schwefelsäure, Salzsäure, Kieselsäure, Phosphorsäure, Ameisensäure und/oder Essigsäure handeln. Der Einsatz von Salzen von Guanidinverbindungen der Formel (II) kann in Kombination mit anorganischen Basen erfolgen, um in situ aus den Salzen die freien Guanidinverbindungen der Formel (II) zu erhalten. Als anorganische Basen für diesen Zweck kommen z.B. Alkali- und/oder Erdalkalihydroxide und/oder Erdalkalioxide in Frage. Bevorzugt sind wässrige Lösungen oder Aufschlämmungen dieser Basen, insbesondere wässrige Natronlauge, wässrige Kalilauge und wässrige Lösungen oder Aufschlämmungen von Kalziumhydroxid. Es können auch Kombinationen mehrerer Basen angewendet werden.

Häufig ist es vorteilhaft, die Guanidinverbindungen der Formel (II) als Salze einzusetzen, weil sie in dieser Form im Handel erhältlich und die freien Guanidinverbindungen zum Teil in Wasser schwer löslich oder nicht lagerstabil sind. Wenn man anorganische Basen einsetzt, können diese in stöchiometrischen, unterstöchiometrischen und überstöchiometrischen Mengen, bezogen auf Salze von Guanidinverbindungen, verwendet werden. Vorzugsweise setzt man 10 bis 100 Äquivalent-% anorganische Base (bezogen auf Salze der Guanidinverbindungen) ein. Die Zugabe anorganischer Basen hat zur Folge, dass bei der Mikroverkapselung in der wässrigen Phase Guanidinverbindungen mit freien NH₂-Gruppen zur Reaktion mit den in der Ölphase enthaltenden Polyisocyanaten zur Verfügung stehen. Bei der Mikroverkapselung erfolgt die Zugabe von Salzen von Guanidinverbindungen und Basen zweckmäßigerweise so, dass man sie getrennt der wässrigen Phase zufügt.

Vorzugsweise wird Guanidin oder werden Salze von Guanidin mit Kohlensäure, Salpetersäure, Schwefelsäure, Salzsäure, Kieselsäure, Phosphorsäure, Ameisensäure und/oder Essigsäure eingesetzt.

Besonders vorteilhaft ist es, Salze von Guanidinverbindungen mit schwachen Säuren einzusetzen. Diese befinden sich in wässriger Lösung in Folge Hydrolyse im Gleichgewicht mit der entsprechenden freien Guanidinverbindung. Die freie Guanidinverbindung wird während des Verkapselungsprozesses verbraucht und bildet sich gemäß dem Massenwirkungsgesetz laufend nach. Diesen Vorteil zeigt in besonderer Weise das Guanidincarbonat. Beim Einsatz von Salzen von Guanidinverbindungen mit schwachen Säuren ist ein Zusatz anorganischer Basen zur Freisetzung der freien Guanidinverbindungen nicht erforderlich.

Die für die vorliegende Erfindung in Frage kommenden Guanidinverbindungen der Formel (II) können auch durch Ionenaustausch aus ihren wasserlöslichen Salzen nach dem Stand der Technik mit Hilfe handelsüblicher basischer Ionenaustauscher hergestellt werden. Man kann das Eluat aus dem Ionenaustauscher direkt zur Kapselwandbildung heranziehen, indem man es mit der Öl-in-Wasser-Emulsion vermischt.

Beispielsweise kann man soviel Guanidinverbindung einsetzen, dass pro Mol NCO-Gruppen, die als Polyisocyanat in der Ölphase vorliegen, 0,2 bis 4,0 Mol an freien NH ₂-Gruppen in Form von Guanidinverbindungen in die Wasserphase eingebracht oder dort freigesetzt werden. Vorzugsweise beträgt diese Menge 0,5 bis 1,5 Mol. Beim Einsatz von Guanidinverbindungen in unterstöchiometrischer Menge verbleiben nach der Reaktion mit dem Polyisocyanat noch freie NCO-Gruppen. Diese reagieren dann im allgemeinen mit Wasser, was üblicherweise nicht kritisch ist, weil dabei neue, freie, zur Vernetzung fähige Aminogruppen entstehen.

Vorzugsweise werden die Guanidinverbindungen, insbesondere Guanidincarbonat, in Form wässriger Lösungen eingesetzt. Die Konzentration solcher Lösungen ist unkritisch und im allgemeinen nur durch die Löslichkeit der Guanidinverbindungen in Wasser begrenzt. Geeignet sind z.B. 1 bis 20 gew.-%ige, insbesondere 10 bis 20 gew.-%ige wässrige Lösungen von Guanidinverbindungen.

Als weitere "Vernetzer", d.h. Verbindungen, die an der Phasengrenzfläche von Öl und Wasser aus der Wasserphase heraus in die Ölphase hineindiffundieren und dort mit den freien Isocyanatgruppen reagieren, können neben den Guanidinverbindungen zusätzlich noch aliphatische und/oder cycloaliphatische Amine eingesetzt werden, die wenigstens zwei primäre und/oder sekundäre Aminogruppen besitzen.

Der Anteil der Guanidinverbindung, insbesondere der an Guanidincarbonat an der Gesamtvernetzermenge beträgt vorzugsweise 50 Gew.-% oder mehr.

Bevorzugte Amine besitzen ein Molekulargewicht von weniger als 200 g/mol. Als besonders bevorzugte Amine sind zu nennen:
Hydrazin, Ethylendiamin, Diethylentriamin, Triethylentetramin, Tetraethylenpentamin, Aminoethylpiperazin, Propylendiamin, N-Methyldipropylentriamin, Bis-(3-aminopropyl) amin, Hexamethylendiamin sowie 2,5-Diamino-2,5-dimethylhexan.
Werden als Vernetzer Gemische von Guanidinverbindungen und Aminen eingesetzt, so kann deren Gesamtgehalt an primären oder sekundären Aminogruppen rechnerisch bzw. analytisch ermittelt und in Relation zu den in der Ölphase vorhandenen NCO-Gruppen gesetzt werden:
   Pro Mol NCO-Gruppen, die als Polyisocyanat in der Ölphase vorliegen, können 0,2 bis 4,0 Mol an mit NCO-Gruppen reagierenden Aminogruppen (primär oder sekundär) in die Wasserphase eingebracht werden. Als Grundregel wird definiert, dass eine NCO-Gruppe eine primäre oder eine sekundäre Aminogruppe zur Abreaktion benötigt. Folgereaktionen werden nicht berücksichtigt. Werden Gemische von Guanidinverbindungen mit Aminen eingesetzt, so soll mindestens die Hälfte (50 Mol-%) von den in der Mischung vorhandenen Aminogruppen von den Guanidinverbindungen erbracht werden.

Die Polyisocyanate mit Isocyanuratstruktur können erfindungsgemäß einen Anteil an der hydrophoben, organischen Phase von 2 - 8 Gew.-%, bevorzugt 3 - 6 Gew.-%, und ganz besonders bevorzugt von 3 - 5 Gew.-% ausmachen.

Im Rahmen dieser Erfindung entspricht der Polyisocyanatgehalt der Ölphase bei der Herstellung der Mikrokapsel dem späteren mittleren Wandanteil der Mikrokapsel.

Der Beitrag des Vernetzers zum Wandaufbau wird aus Gründen der Vereinfachung nicht berücksichtigt.

Mit dem ganz besonders bevorzugten Bereich von 3 - 5 Gew.-% lassen sich Mikrokapsel-Dispersionen erzeugen, deren wichtigste anwendungstechnische Eigenschaften denen des Standes der Technik, der höhere Wandanteile beinhaltet, entsprechen. In einigen Fällen, wie anhand der Ausführungsbeispiele belegt wird, wird der Stand der Technik in verschiedenen Eigenschaften sogar übertroffen. Dies ist insofern erstaunlich, als man üblicherweise annimmt, dass mit sinkender Menge Wandanteil eine höhere mechanische Sensibilität zu erwarten ist.

Die erfindungsgemäßen Mikrokapseln können im Inneren, in organischen Lösungsmitteln gelöst, alle diejenigen Farbgeber enthalten, die nach dem Stand der Technik zur Herstellung kohlefreier Durchschreibepapiere im Handel sind und von denen bekannt ist, dass sie mit Isocyanaten nicht reagieren. Dies können beispielsweise Verbindungen vom Typ der Triphenylmethanverbindungen, Diphenylmethanverbindungen, Bisindophthalidverbindungen, Bisarylcarbazolylmethanverbindungen, Xanthenverbindungen, Benzoxazinverbindungen, Thiazinverbindungen und Spiropyranverbindungen sein, insbesondere solche, die als Farbgeber zur Herstellung kohlefreier Durchschreibepapiere bekannt sind. Es können auch Gemische mehrerer Farbgeber eingesetzt werden. Einige einsetzbare Farbgeber sind z.B. beschrieben in EP-A 591 106, EP-A 315 901, EP-A 234 394, DE-A 3 622 262 und EP-A 187 329.

Grundsätzlich sind die erfindungsgemäß hergestellten Mikrokapseln geeignet, eine Vielzahl chemisch unterschiedlicher Verbindungen einzuschließen, sofern diese in organischen Lösungsmitteln löslich sind und nicht mit den verwendeten Isocyanaten bzw. den aminischen Vernetzern sowie Guanidinverbindungen reagieren. Beispielsweise seien genannt: Duftstoffe, Aromen, Klebstoffe, Herbizide, Pestizide, Insektizide, Katalysatoren, Pharmazeutika und andere.

Als organische mit Wasser nicht mischbare und inerte Lösungsmittel, die bei der Herstellung der Mikrokapseln zusammen mit dem zu verkapselten Stoff und dem Polyisocyanat Bestandteil der Ölphase sind, kommen z.B. aromatische, aliphatische und naphthenische Kohlenwasserstoffe, Carbonsäureester, chlorierte Paraffine, Öle tierischer und pflanzlicher Herkunft, natürliche Fette mit Schmelzpunkten im Bereich 10 bis 35°C flüssige Fettderivate und über 100°C siedende aromatische und aliphatische Ether in Frage. Es können auch Gemische mehrerer Lösungsmittel eingesetzt werden.

Bei der Herstellung erfindungsgemäßer Mikrokapseln kann die wässrige Phase gegebenenfalls Emulgatoren, Stabilisatoren und/oder die Koaleszenz verhindernde Stoffe enthalten. Emulgatoren kann gegebenenfalls auch die Ölphase enthalten. Die Menge derartiger Zusätze kann z.B. im Bereich 0,5 bis 10 Gew.-%, bezogen auf die jeweilige Phase liegen.

Für die vorliegende Erfindung können beispielsweise Lösungsmittel vom Typ der alkylierten Aromaten, Chlorparaffine, Ester, niedrigschmelzende natürliche Fette und Wachse, natürliche Öle sowie sich von letzteren ableitende Ester mit niedrigen Alkoholen, verwendet werden.

Bevorzugt sind Lösungsmittelgemische aus wenigstens einer Verbindung ausgewählt aus der Gruppe I und wenigstens einer Verbindung aus der Gruppe II.

Unter Lösungsmittel der Gruppe I werden Alkylaromaten, wie Diisopropylnaphthaline, halogenierte Paraffine, wie Chlorparaffin, natürliche Fette und Öle, wie z.B. Kokosfett und synthetisch hergestellte aliphatische oder aromatische Ester verstanden.

Unter Lösungsmittel der Gruppe II werden Naphthene (d.h. cycloaliphatische Kohlenwasserstoffe) sowie Isoparaffine verstanden.

Bevorzugt ist der Anteil an Lösungsmittel aus der Gruppe II wenigstens 40 Gew.-%, insbesondere wenigstens 50 Gew.-%, besonders bevorzugt wenigstens 55 Gew.-%, bezogen auf die Gesamtmenge an organischen Lösungsmittel.

Als Beispiele für Lösungsmittel der Gruppe I seien folgende Produktklassen genannt, die jeweils auch in Form ihrer Isomerenmischungen eingesetzt werden können.

Diisopropylnaphthalin wie KMC® 113 von Rütgers Kureha Solvents GmbH, Alkylaromaten wie SURESOL® 290 von Koch Chemical Company, oder SURESOL® 300 von Koch Chemical Company, Phenyl-xylyl-ethane wie SAS® 296 von Nippon Soda Co. Ltd., oder PXE von Daio Solvents, Chlorparaffine wie Meflex® DA von Deutsche ICI GmbH, oder Solvocaffaro® von Industrie Chimiche Caffaro S.p.A., oder Kokosfett wie Cocopur® von Walter Rau G.m.b.H.

Als Lösungsmittel der Gruppe II seien folgende Produkte genannt:
Isoparaffine wie Exxsol® D 100, oder NORPAR® , oder ISOPAR® von Deutsche EXXON CHEMICAL GmbH, oder Isohexadekan von Degussa-Hüls AG, oder Naphthene wie Gravex® 913 von Deutsche Shell AG oder Nytex® 800 und ähnl. Typen von Nynäs Naphthenics AB.

Die Erfindung betrifft weiterhin ein Verfahren zur Herstellung der erfindungsgemäßen Mikrokapseln, das dadurch gekennzeichnet ist, dass man
a) eine Ölphase aus Isocyanurat-haltigen Polyisocyanaten, gegenüber Isocyanaten inertes, mit Wasser nicht mischbares Lösungsmittel, wenigstens einer einzukapselnden Verbindung und gegebenenfalls weitere Zusätze und
b) eine Wasserphase aus Wasser, Stabilisatoren und gegebenenfalls weiteren Hilfsstoffen,
vorzugsweise mittels eines Dispergiergerätes, in eine Emulsion überführt, und dazu Guanidinverbindungen und gegebenenfalls Amine als Vernetzer gibt.

Bevorzugt entspricht dabei die Öltröpfchengröße derjenigen der Mikrokapsel.

Im Rahmen dieser Anmeldung wird unter Stabilisator eine Verbindung verstanden, die in der Lage ist die Koaleszenz der Tröpfchen zu vermeiden und die Oberflächenspannung zwischen Öl- und Wasserphase herabzusetzen. Anstelle einer Verbindung können auch mehrere Verbindungen eingesetzt werden, die jeweils nur eine Funktion übernehmen.

Im folgenden wird eine allgemeine Herstellungsvariante als Beispiel vorgestellt. Dabei werden zunächst die einzelnen Komponenten beschrieben.

### Lösung A

Wasser mit einem Zusatz von 0,5 - 10 Gew.-% eines Schutzkolloids. Dieses kann aus teilverseiften Polyvinylacetaten, Polyvinylalkohol, Carboxymethylcellulose und deren Derivaten, Gummi arabicum oder Eiweißhydrolysaten bestehen. Vorzugsweise wird ein teilverseiftes Polyvinylacetat mit einem Verseifungsgrad von etwa 80 % in einer Konzentration von 0,5 bis 2,0 Gew.-% einsetzt. Geeignete Handelsprodukte sind z.B. Airvol® 523 von Air Products Nederland B.V. oder Mowiol® 26 - 88 von Clariant (Deutschland) GmbH.

### Lösung B

Lösung der einzukapselnden Verbindung bzw. Verbindungen, insbesondere des Farbgebers, in einem mit Wasser nicht mischbaren gegenüber Isocyanaten inertem Lösungsmittel wie beispielsweise Diisopropylnaphthalin (wie KMC® -113 von Rütgers Kureha Solvents GmbH).

Die Konzentration der zu verkapselnden Verbindung, insbesondere des Farbgebers, im Lösungsmittel beträgt vorzugsweise 3 bis 15 Gew.-%, bezogen auf die Lösung, je nach Löslichkeit der Farbstoffe und gewünschter Farbtiefe.

### Komponente C

Co-Lösungsmittel, das als Verschnittmittel dient, beispielsweise naphthenische Kohlenwasserstoffe wie GRAVEX® 913 von Deutsche Shell AG oder Nytex® 800 von Nynäs Naphthenics AB oder Isoparaffine wie Exxsol® D 100 von Deutsche EXXON CHEMICAL GmbH. Naphtenische Öle sind besonders geeignet.

### Komponente D

Hierbei handelt es sich um die erfindungsgemäß verwendeten Isocyanurat-haltigen Polyisocyanate. Bevorzugt ist beispielsweise Hexamethylendiisocyanat-Isocyanurat (s.a. Formel I mit R = (CH₂)₆) mit einem NCO-Gehalt von wenigstens 15 Gew.-% und einem Isocyanurat-Anteil von wenigstens 30 Gew.-% wie z.B. BAYMICRON® OXA WM 111 von Bayer AG, Leverkusen.

### Lösung E

Entsalztes Wasser, in dem die Guanidinverbindung, insbesondere Guanidincarbonat, und gegebenenfalls Amine, insbesondere aliphatische Polyamine, aufgelöst sind. Bevorzugt wird eine Lösung mit 80 - 90 Gew.-% Wassergehalt und 20 - 10 Gew.-% Vernetzergemisch eingesetzt.

Das erfindungsgemäße Verfahren kann sowohl kontinuierlich als auch diskontinuierlich durchgeführt werden.

Bei der diskontinuierlichen Verkapselung geht man vorzugsweise so vor, indem man Komponente D mit einer entsprechenden Menge der Lösung B und gegebenenfalls mit Komponente C vermischt, die nun entstandene Lösung zu einer entsprechenden Menge der Lösung A unter schnellem Rühren hinzufügt bis eine grobteilige Emulsion entstanden ist. Mittels eines handelsüblichen schnelllaufenden Dispergiergeräts wird dann, vorzugsweise bei Temperaturen unterhalb von 40°C, so lange emulgiert, bis eine feinteilige Emulsion entstanden ist, deren Tröpfchengröße derjenigen der gewünschten Mikrokapsel entspricht.

Hiernach reduziert man die Tourenzahl des Emulgiergeräts und fügt vorzugsweise ebenfalls bei Temperaturen unter 40°C die Lösung E hinzu, wodurch die Bildung der Kapselwand gestartet wird. Die Verkapselungsreaktion wird dann vorzugsweise unter Temperaturerhöhung auf 60 - 90°C, vorzugsweise bei 70 - 80°C unter mäßigem Rühren zu Ende geführt.

Es resultiert eine wässrige Dispersion der erfindungsgemäßen Mikrokapseln. Der Kapselanteil kann je nach Menge und Verhältnis der Einsatzstoffe zwischen 30 und 65 Gew.-%, vorzugsweise 45 - 55 Gew.-% betragen.

Diese Art der diskontinuierlichen Verkapselung entspricht in ihrer Durchführung insofern dem Stand der Technik und erfordert keine besonderen verfahrenstechnischen Maßnahmen.

Bei der kontinuierlichen Verkapselung geht man vorzugsweise so vor, dass die Einsatzlösungen bzw. -komponenten A, B, C und D mittels geeigneter Präzisionspumpen dem Emulgierapparat kontinuierlich zugeführt werden, wobei Lösung B und Komponente D vorzugsweise mittels handelsüblicher statischer oder dynamischer Mischer vorgemischt werden, bevor sie in einem weiteren statischen oder dynamischen Mischer mit Komponente C vereinigt werden. Hierdurch entsteht eine homogene Ölphase, die den in Öl gelösten Farbgeber, das Polyisocyanat sowie gegebenenfalls das Verschnittmittel enthält.

Diese Ölphase wird dann mit der Lösung A vereinigt, gegebenenfalls nochmals vermischt und in den Emulgierapparat eingepumpt. Mittels geeigneter Kühlvorrichtungen kann die dort auftretende Temperaturerhöhung, bedingt durch Scherwirkung, auf ein akzeptables Maß reduziert werden. Vorzugsweise wird die Temperatur so gesteuert, dass im Auslauf des Emulgierapparates eine Temperatur von 25 - 40°C eingehalten wird. Die austretende, feinteilige Emulsion wird nun kontinuierlich mit Lösung E vereinigt und vermischt, was ebenfalls mit Hilfe von statischen oder dynamischen Mischern bzw. Rührorganen geschehen kann.

Die hiernach beginnende Wandbildung bzw. Verkapselung kann nun wahlweise in einer Kesselkaskade oder in einzelnen Kesseln vervollständigt werden. Dazu wird in einer Kesselkaskade unter Rühren die Temperatur stufenweise auf bis zu 90°C erhöht. Das am Ende der Kaskade austretende Produkt stellt die fertige Mikrokapseldispersion dar. Wird die Reifung in einzelnen Kesseln durchgeführt, so ist eine ausreichende und dem Durchsatz angepasste Anzahl von Kesseln bereitzustellen, so dass der erste Kessel bereits wieder entleert ist, wenn die Füllung des letzten Kessels beendet ist ("Swing-Verfahren"). Die Beheizung der einzelnen Kessel kann zweckmäßigerweise - wie beim Kaskadenverfahren - durch das kontrollierte Einspeisen von Niederdruckdampf direkt in das Produkt erfolgen. Auch hierbei entspricht die verfahrenstechnische Durchführung insofern dem Stand der Technik.

Die Erfindung betrifft weiterhin kohlefreie Durchschreibepapiere, die die erfindungsgemäßen Mikrokapseln enthalten, worin ein Farbgeber eingekapselt ist.

Bevorzugt enthalten diese Durchschreibepapiere die Mikrokapseln nur auf einer Seite (sog. CB- bzw. CFB-Papier). Ganz besonders bevorzugt ist die mit den erfindungsgemäßen Mikrokapseln beschichtete Seite frei von Entwickler. Gegebenenfalls ist die andere Seite des Durchschreibepapiers mit einem Entwickler beschichtet (CFB-Papier).

Als Entwickler sind beispielsweise solche vom Clay-Typ, Phenolharz-Typ bzw. Zinksalizylat-Typ bevorzugt.

Die Erfindung betrifft weiterhin ein Set von mit den erfindungsgemäßen Mikrokapseln beschichteten Durchschreibepapieren. Dieses Set ist vorzugsweise dadurch gekennzeichnet, dass es aus einem obenliegenden Deckblatt bis zu 9 darunterliegenden Zwischenblättern und einem darunterliegenden Unterblatt schichtförmig aufgebaut ist, wobei die Rückseite des Deckblatts (Original) mit den erfindungsgemäßen Mikrokapseln beschichtet ist, die Zwischenblätter auf der Vorderseite mit einem Entwickler und auf der Rückseite wieder mit Mikrokapseln beschichtet sind, und das Unterblatt auf der Vorderseite lediglich mit Entwickler beschichtet ist, wobei die einzelnen Blätter so angeordnet sind, dass jeweils die Entwickler-beschichtete Seite an die Mikrokapsel-beschichtete Seite angrenzt, so dass beim Beschreiben oder Bedrucken des Deckblattes (Original) die Mikrokapseln der Rückseite und die der darunterliegenden Blätter zerdrückt werden, den Farbgeber freigeben und mit dem Entwickler der angrenzenden Seite ein farbiges Abbild des Deckblattes ergeben.

Bevorzugt sind bis zu 7, insbesondere bis zu 4 Zwischenblätter im Set.

Die erfindungsgemäßen Mikrokapseln haben neben vergleichbaren Gebrauchseigenschaften zu Mikrokapseln mit dickeren Wänden den überraschenden Vorteil eines deutlich verbesserten Alterungsverhaltens im Vergleich mit den entsprechenden dickerwandigen Kapseln.

### Beispiele

### Beispiel 1a (Vergleichsbeispiel)

Hierbei wurde die Mikrokapseldispersion gemäß U.S. 5.635.211 (= EP-A-727 251), Beispiel 10, unter Verwendung von Guanidin als Vernetzer hergestellt.

### Beispiel 1b (erfindungsgemäß)

Unter identischen Bedingungen wie in Beispiel 1a wurden entsprechende erfindungsgemäße Mikrokapseln hergestellt, wobei als Vernetzer Guanidincarbonat anstelle von Guanidin eingesetzt wurde, und die beiden Kapseltypen hinsichtlich ihrer Eigenschaften gegenübergestellt wurden (siehe Tabelle). Der NCO-Gehalt in Beispiel 1a und 1b beträgt 21,6 %, der Isocyanuratanteil 96,9 Gew.-%, bezogen auf eingesetztes Polyisocyanat. Davon ist der Anteil an Hexamethylendiisocyanurat-trimerisat >45 Gew.-% und der Anteil an höheren Oligomerisaten >30 Gew.-%.

**Tabelle**

| | | | | Alterungsverhalten Intensität der Durchschrift nach Alterung* | |
|---|---|---|---|---|---|
| Bsp. | Typ | Vernetzer | Wandanteil** (%) | Ausgangswert | 6 Tage; 70°C; 75 % rel. Feuchte |
| 1a | Vergleich | Guanidin | 10 | 53,0 | 46,2 |
| 1b | Erfindung | Guanidin-carbonat | 4 | 52,7 | 49,0 |

| | | | | | |
|---|---|---|---|---|---|
| * Die Alterung wird beurteilt, indem man die Durchschriften entsprechend gealterten CB-Papiers (CB = coated back) mit der Durchschrift des ungealterten CB-Papiers als Bezug vergleicht. Je höher der Zahlenwert, desto intensiver das Schriftbild. | | | | | |
| ** entspricht Polyisocyanat-Gehalt in Ölphase. | | | | | |

Die erfindungsgemäßen Mikrokapseln zeigen ein deutlich besseres Alterungsverhalten als die des Standes der Technik, trotz des deutlich verringerten Wandanteils.

### Beispiel 2 (erfindungsgemäß)

### a) Herstellung einer Mikrokapseldispersion

Für die Herstellung von Mikrokapseln zum Einsatz auf dem Gebiet kohlefreier Durchschreibepapiere wurde zunächst eine Ölphase zubereitet, indem ein Farbgeber bestehend aus 12 g Kristallviolettlacton bei 120°C in 187,2 g Diisopropylnaphthalin gelöst und diese Lösung bei Raumtemperatur mit 20 g Polyisocyanurat aus Beispiel 1 versetzt wurden. Dazu wurden 280,8 g naphthenisches Isoparaffin-Gemisch als Verschnittmittel gegeben. Diese Ölphase wurde mit 442,3 g einer Wasserphase bestehend aus einer wässrigen Polyvinylalkohollösung (5,3 g in 437 g Wasser) zusammengebracht, durch Rühren eine grobe Voremulsion hergestellt und durch 8-minütiges Emulgieren mit einer Mischsirene (8 950 U/min) eine Feinemulsion erhalten. Die erhaltene Feinemulsion wurde bei Raumtemperatur mit einer wässrigen Guanidincarbonat-Lösung (7,0 g in 50,7 g deionisiertem Wasser) versetzt, das entstandene Gemisch innerhalb von 1 Stunde unter Rühren auf 60°C erwärmt und 3 Stunden bei dieser Temperatur nachgerührt. Es bildete sich eine ca. 40 %ige Mikrokapsel-Dispersion, deren Mikrokapseln eine durchschnittliche Größe von 7,8 µm aufwiesen. Der Wandanteil beträgt entsprechend dem Gehalt an Polyisocyanat in der Ölphase 4 Gew.-%.

### b) Herstellung eines kohlefreien Durchschreibepapieres vom Typ CFB (coated front and back)

12,9 g der gemäß a) erhaltenen Mikrokapseldispersion, 2,05 g eines Abstandhalters auf Cellulosebasis (Arbocell® BE600/30) 2,01 g eines Binders auf Styrol-Butadien-Latex-Basis (Baystal® P KA8588) und 26,3 g deionisiertes Wasser wurden vermischt und dieses Gemisch mittels einer Drahtrakel (40 µ) auf die Rückseite eines handelsüblichen CF-Papiers aufgebracht und mit einem Strom warmer Luft getrocknet. (CF-Papier bedeutet coated front, d.h. ein Papier, auf dessen Oberseite ein Entwickler für Farbstoffvorläufer aufgebracht ist.)

### Beispiel 3 (erfindungsgemäß)

Es wurde analog zu Beispiel 2 verfahren, wobei jedoch eine schwarz durchschreibende Farbgeberrezeptur eingesetzt wurde.

Die verwendete Ölphase besteht aus 28,80 g eines Farbgebergemisches, 20 g HDI-Isocyanurat gemäß Beispiel 1, 180,48 g Düsopropylnaphthalin und 270,72 g eines naphthenischen Isoparaffin-Gemisches (Gravex® 913) als Verschnittmittel.

Die Farbgebermischung setzt sich dabei wie folgt zusammen.

| | |
|---|---|
| 5 % | Pergascript® Blau I2R (Ciba Spec. Chem.) |
| 10 % | Pergascript® Blau SRB (dito) |
| 28 % | Pergascript® Grün I2GN (dito) |
| 57 % | PSD 184 (Mitsubishi Int. GmbH) |

Der Wandanteil beträgt 4 Gew.-%, bezogen auf das Gesamtgewicht der Mikrokapsel.

### Beispiel 4 (erfindungsgemäß)

Es wurde analog zu Beispiel 3 verfahren, wobei als Vernetzer ein Gemisch aus Guanidincarbonat und Diethylentriamin verwendet wurde.

Die Ölphase besteht dabei aus 28,5 g Farbgebermischung gemäß Beispiel 3, 223,3 g Diisopropylnaphthalin-Isomerengemisch, 25 g HDI-Isocyanurat gemäß Beispiel 1 sowie 223,3 g eines naphthenischen Kohlenwasserstoffgemisches (Nytex® 801) als Verschnittmittel.

Zu der wässrigen Feinemulsion wird dann eine wässrige Lösung gegeben aus 4,67 g Guanidincarbonat, 0,89 g Diethylentriamin und 52,1 g deionisiertem Wasser gegeben. Der Wandanteil beträgt 5 Gew.-%.

### Beispiel 5 (erfindungsgemäß)

Es wurde analog zu Beispiel 3 verfahren, jedoch mit reduzierter Menge an primärem Wandmaterial.

Die Ölphase besteht aus 29,10 g des Farbgebergemisches aus Beispiel 3, 182,4 g Diisopropylnaphthalin (Isomerengemisch), 273,5 g eines naphthenischen Isoparaffin-Gemisches (Gravex® -913) als Verschnittmittel und 15 g HDI-Isocyanurat gemäß Beispiel 1.

Zu der wässrigen Feinemulsion wird dann eine wässrige Lösung aus 5,25 g Guanidincarbonat und 52,55 g deionisiertem Wasser gegeben. Der Wandanteil beträgt 3 Gew.-%.

In der folgenden Tabelle sind die Eigenschaften der Mikrokapseln aus den Beispielen 2 bis 6 zusammengestellt.

**Tabelle**

| | | | | Intensitätswerte der Durchschrift nach Alterung***) | |
|---|---|---|---|---|---|
| Beispiel | Wandanteil % | Farbgeber | Kapselgröße µm | Ausgangswert**) | 6 Tage 70°C/75 % rel. Feuchte |
| 2 | 4 | blau | 5,2 | 48,9 | 48,2 |
| 3 | 4 | schwarz | 5,8 | 49,9 | 46,0 |
| 4 | 5 | schwarz | 5,5 | 49,7 | 49,0 |
| 6 | 3 | schwarz | 6,0 | 55,5 | 48,1 |

| | | | | | |
|---|---|---|---|---|---|
| ** Lagerung bei Umgebungstemperatur bzw. Raumklima. | | | | | |
| *** Je höher der Zahlenwert desto intensiver das Schriftbild. | | | | | |

## Patentansprüche

1. Mikrokapseln, deren Wände aus Umsetzungsprodukten von Polyisocyanaten, Guanidinverbindungen und gegebenenfalls Aminen bestehen oder solche Umsetzungsprodukte enthalten, wobei die Polyisocyanate einen Isocyanurat-Anteil von wenigstens 80 Gew.-%, bezogen auf Polyisocyanat, besitzen, **dadurch gekennzeichnet, dass** die Wände im Mittel weniger als 9 Gew.-%, bezogen auf das Gesamtgewicht der Mikrokapsel, ausmachen.

2. Mikrokapseln nach Anspruch 1, **dadurch gekennzeichnet, dass** es sich bei den Guanidinverbindungen um solche der Formel (II) handelt 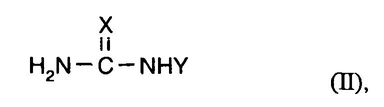 in der
X für HN=, 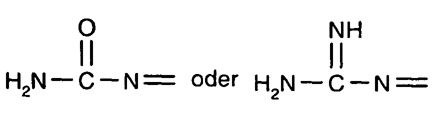
und
Y für H-; NC-; H₂N-; HO-; 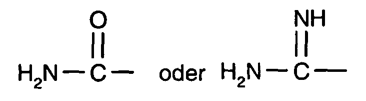 stehen
oder deren Salze mit Säuren.

3. Mikrokapseln nach Anspruch 2, **dadurch gekennzeichnet, dass** es sich bei den Salzen um Salze von Kohlensäure, Salpetersäure, Schwefelsäure, Salzsäure, Kieselsäure, Phosphorsäure, Ameisensäure und/oder Essigsäure handelt.

4. Mikrokapseln nach Anspruch 1, **dadurch gekennzeichnet, dass** als Guanidinverbindung Guanidincarbonat verwendet wird.

5. Mikrokapseln nach Anspruch 1, **dadurch gekennzeichnet, dass** als Isocyanuratstruktur-aufweisende Polyisocyanate trimerisierte Diisocyanate der Formel (I) in Frage 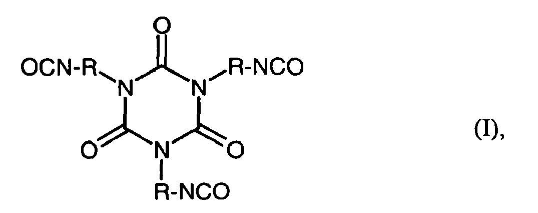 worin
R für einen zweiwertigen aliphatischen oder cycloaliphatischen Rest steht, insbesondere für einen C₁-C₁₀-aliphatischen Rest oder für einen C₆-C₁₀-cycloaliphatischen Rest, vorzugsweise für (CH₂)₆ steht,
als auch deren Umsetzungsprodukte mit weiteren 2n Äquivalenten Diisocyanaten der Formel OCN-R-NCO unter Isocyanuratbildung, eingesetzt werden.

6. Mikrokapseln nach Anspruch 1, **dadurch gekennzeichnet, dass** als Polyisocyanate Hexamethylendiisocyanatderivate mit Isocyanurateinheiten eingesetzt werden.

7. Mikrokapseln nach Anspruch 1, **dadurch gekennzeichnet, dass** als Amine aliphatische und/oder cycloaliphatische Amine eingesetzt werden, die wenigstens 2 primäre und/oder sekundäre Aminogruppen besitzen.

8. Mikrokapseln gemäß Anspruch 7, **dadurch gekennzeichnet, dass** die Guanidinverbindung und das aliphatische und/oder cycloaliphatische Amin eingesetzt werden, wobei der Anteil der Guanidinverbindung, insbesondere Guanidincarbonat, wenigstens 50 Mol-%, bezogen auf die Summe beider Komponenten, ausmacht.

9. Mikrokapseln gemäß Anspruch 1, **dadurch gekennzeichnet, dass** der mittlere Wandanteil weniger als 7 Gew.-%, insbesondere weniger als 6 Gew.-%, bezogen auf das Gesamtgewicht der Mikrokapsel, ausmacht.

10. Verfahren zur Herstellung der Mikrokapseln gemäß Anspruch 1, **dadurch gekennzeichnet, dass** man
a) eine Ölphase aus Isocyanurat-haltigen Polyisocyanaten, wenigstens einem gegenüber Isocyanaten inertem, mit Wasser nicht-mischbarem Lösungsmittel, wenigstens eine einzukapselnde Verbindung und gegebenenfalls weitere Zusätze und
b) eine Wasserphase aus Wasser, Stabilisator und gegebenenfalls weiteren Hilfsstoffen,
in eine Emulsion überführt, und dazu Guanidinverbindungen und gegebenenfalls Amine als Vernetzer gibt.

11. Kohlefreie Durchschreibepapiere, die Mikrokapseln gemäß Anspruch 1 enthalten, wobei ein Farbgeber eingekapselt ist.

12. Set von Durchschreibpapieren, **dadurch gekennzeichnet, dass** es aus einem obenliegenden Deckblatt bis zu 9 darunterliegenden Zwischenblättern und einem darunterliegenden Unterblatt schichtförmig aufgebaut ist, wobei die Rückseite des Deckblatts (Original) mit den Mikrokapseln gemäß Anspruch 1 beschichtet ist, die Zwischenblätter auf der Vorderseite mit einem Entwickler und auf der Rückseite wieder mit Mikrokapseln beschichtet sind, und das Unterblatt auf der Vorderseite lediglich mit Entwickler beschichtet ist, wobei die einzelnen Blätter so angeordnet sind, dass jeweils die Entwickler-beschichtete Seite an die Mikrokapsel-beschichtete Seite angrenzt, so dass beim Beschreiben oder Bedrucken des Deckblattes (Original) die Mikrokapseln der Rückseite und die der darunterliegenden Blätter zerdrückt werden, den Farbgeber freigeben und mit dem Entwickler der angrenzenden Seite ein farbiges Abbild des Deckblattes ergeben.

## Claims

1. Microcapsules whose walls comprise reaction products of polyisocyanates, guanidine compounds and optionally amines wherein the polyisocyanates have an isocyanurate content of at least 80% by weight, based on polyisocyanate, **characterized in that** the walls comprise on average less than 9% of the total weight of the microcapsule.

2. Microcapsules according to Claim 1, **characterized in that** the guanidine compounds are guanidine compounds of the formula (II) 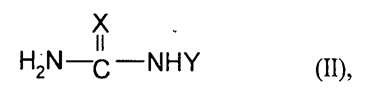 where
X is HN=, 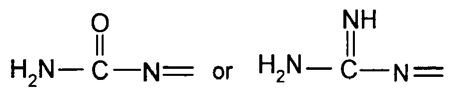 and
Y is H-; NC-; H₂N-; HO-; 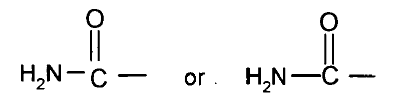
or their salts with acids.

3. Microcapsules according to Claim 2, **characterized in that** the salts are salts of carbonic acid, nitric acid, sulphuric acid, hydrochloric acid, silicic acid, phosphoric acid, formic acid and/or acetic acid.

4. Microcapsules according to Claim 1, **characterized in that** the guanidine compound used is guanidine carbonate.

5. Microcapsules according to Claim 1, **characterized in that** the isocyanurate content polyisocyanates used are trimerized diisocyanates of the formula (I) 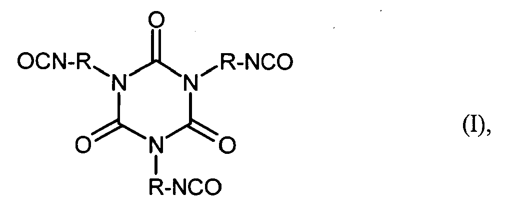 where
R is a divalent aliphatic or cycloaliphatic radical, especially a C₁-C₁₀ aliphatic radical or a C₆-C₁₀ cycloaliphatic radical, preferably (CH₂)₆,
and also their reaction products with a further 2n equivalents of diisocyanates of the formula OCN-R-NCO with isocyanurate formation.

6. Microcapsules according to Claim 1, **characterized in that** the polyisocyanates used are hexamethylene diisocyanate derivatives with isocyanurate units.

7. Microcapsules according to Claim 1, **characterized in that** the amines used are aliphatic and/or cycloaliphatic amines possessing at least 2 primary and/or secondary amino groups.

8. Microcapsules according to Claim 7, **characterized in that** the guanidine compound and the aliphatic and/or cycloaliphatic amine are used in a proportion such that the guanidine compound, especially guanidine carbonate, comprises at least 50 mol% of the sum total of the two components.

9. Microcapsules according to Claim 1, **characterized in that** the average wall fraction comprises less than 7% by weight, especially less than 6% by weight of the total weight of the microcapsule.

10. Process for producing the microcapsules according to Claim 1, **characterized in that**
a) an oil phase comprising isocyanurate-containing polyisocyanates, at least one isocyanate-inert water-immiscible solvent, at least one compound to be encapsulated and optionally further additives and
b) a water phase comprising water, stabilizer and optionally further auxiliaries,
are converted into an emulsion, and guanidine compounds and optionally amines are added thereto as crosslinkers.

11. Carbonless copy papers comprising microcapsules according to Claim 1 encapsulating a colour former.

12. Set of copy papers, **characterized in that** it has a layered construction made up of a topsheet, up to 9 intersheets underneath and a bottom sheet, the back of the topsheet (original) being coated with the microcapsules according to Claim 1, the intersheets being coated with a developer on the front and again with the microcapsules on the back and the bottom sheet being coated only with the developer on the front, the individual sheets being arranged in such a way that in each case the developer-coated side is next to the microcapsule-coated side, so that writing or printing on the topsheet (original) causes the microcapsules of the back and those of the sheets underneath to become crushed, to release the colour former and to combine with the developer of the contiguous side to form a colour image of the topsheet.

## Revendications

1. Microcapsules, dont les parois sont constituées par des produits de transformation de polyisocyanates, de composés de guanidine et le cas échéant d'amines ou qui contiennent ces produits de transformation, les polyisocyanates comprenant une proportion d'isocyanurate d'au moins 80% en poids par rapport au polyisocyanate, **caractérisées en ce que** les parois représentent en moyenne moins de 9% en poids par rapport au poids total des microcapsules.

2. Microcapsules selon la revendication 1, **caractérisées en ce qu'**il s'agit, pour les composés de guanidine de composés de formule (II) 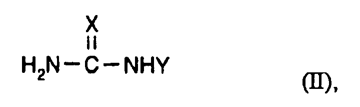 dans laquelle
X représente HN=, 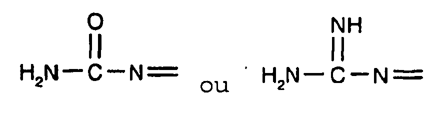 et
Y représente H-, NC-, H₂N-, HO-, 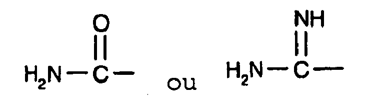
ou leurs sels avec des acides.

3. Microcapsules selon la revendication 2, **caractérisées en ce qu'**il s'agit, pour les sels, de sels de l'acide carbonique, de l'acide nitrique, de l'acide sulfurique, de l'acide chlorhydrique, de l'acide silicique, de l'acide phosphorique, de l'acide formique et/ou de l'acide acétique.

4. Microcapsules selon la revendication 1, **caractérisées en ce qu'**on utilise comme composé de guanidine le carbonate de guanidine.

5. Microcapsules selon la revendication 1, **caractérisées en ce qu'**on utilise comme polyisocyanates présentant une structure isocyanurate des diisocyanates trimérisés de formule (I) 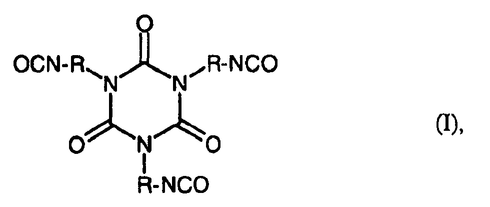 dans laquelle
R représente un radical divalent, aliphatique ou cycloaliphatique, en particulier un radical aliphatique en C₁ à C₁₀ ou un radical cycloaliphatique en C₆ à C₁₀, de préférence (CH₂)₆,
ainsi que leurs produits de transformation avec 2n équivalents de diisocyanates de formule OCN-R-NCO avec formation d'isocyanurate.

6. Microcapsules selon la revendication 1, **caractérisées en ce qu'**on utilise comme polyisocyanates des dérivés d'hexaméthylènediisocyanate avec des unités isocyanurate.

7. Microcapsules selon la revendication 1, **caractérisées en ce qu'**on utilise comme amines des amines aliphatiques et/ou cycloaliphatiques qui présentent au moins 2 groupes amino primaires et/ou secondaires.

8. Microcapsules selon la revendication 7, **caractérisées en ce qu'**on utilise le composé de guanidine et l'amine aliphatique et/ou cycloaliphatique, la proportion de composé de guanidine, en particulier le carbonate de guanidine, représentant au moins 50% en mole par rapport à la somme des deux composants.

9. Microcapsules selon la revendication 1, **caractérisées en ce que** la proportion moyenne de la paroi représente moins de 7% en poids, en particulier moins de 6% en poids par rapport au poids total de la microcapsule.

10. Procédé pour la préparation des microcapsules selon la revendication 1, **caractérisé en ce qu'**on transforme
a) une phase huileuse constituée par des polyisocyanates contenant de l'isocyanurate, au moins un solvant inerte par rapport aux isocyanates, non miscible à l'eau, au moins un composé à encapsuler et le cas échéant d'autres additifs et
b) une phase aqueuse constituée par de l'eau, un stabilisateur et le cas échéant d'autres adjuvants,
en une émulsion et on y ajoute des composés de guanidine et le cas échéant des amines comme réticulants.

11. Papiers autocopiants exempts de carbone, qui contiennent des microcapsules selon la revendication 1, dans lesquelles est encapsulé un colorant.

12. Série de papiers autocopiants, **caractérisée en ce qu'**il s'agit d'une structure stratifiée constituée par une feuille de recouvrement supérieure, jusqu'à 9 feuilles intermédiaires sous-jacentes et une feuille inférieure au-dessous de celles-ci, le verso de la feuille de recouvrement (l'original) étant recouvert par les microcapsules selon la revendication 1, les feuilles intermédiaires étant recouvertes au recto par un agent de développement et au verso à nouveau par des microcapsules et la feuille inférieure n'étant recouverte d'agent de développement qu'au recto, les différentes feuilles étant agencées de telle manière qu'à chaque fois la face recouverte par l'agent de développement est adjacente à la face revêtue par les microcapsules, de telle manière que lors de l'écriture ou de l'impression sur la feuille de recouvrement (l'original), les microcapsules du verso et celles des sous-jacentes sont écrasées, libèrent le colorant, ce qui résulte, avec l'agent de développement de la face adjacente, en une représentation colorée de la feuille de recouvrement.
